# EUROPÄISCHE PATENTSCHRIFT

(11) **EP 0 676 433 B1**
(45) Veröffentlichungstag und Bekanntmachung des Hinweises auf die Patenterteilung: **16.06.1999**
(21) Anmeldenummer: 95104790.1
(22) Anmeldetag: 31.03.1995
(51) Int. Cl.: C08G 18/66, C08J 11/10, C08G 18/40, C08G 18/64, C08J 11/24

(54) **Verfahren zur Herstellung von harten bis zähharten Polyurethanschaumstoffen mit erhöhtem Anteil an offenen Zellen und vermindertem Schrumpf**
Process for the preparation of rigid to semirigid polyurethane foams with an increased open-cell content and reduced shrinkage
Procédé pour la préparation de mousses de polyuréthane rigide et semirigide ayant une teneur élevé en cellules ouvertes et une faible rétraction

(30) Priorität: 08.04.1994 DE 4411864
(43) Veröffentlichungstag der Anmeldung: 11.10.1995
(73) Patentinhaber: BASF Schwarzheide GmbH, 01986 Schwarzheide (DE)
(72) Erfinder: Falke, Peter, Dr., D-01987 Schwarzheide (DE); Rotermund, Inge, D-01990 Ortrand (DE); Naber, Bernhard, D-01987 Schwarzheide (DE)
(74) Vertreter: Karg, Jochen

(56) Entgegenhaltungen:
- EP-A- 0 105 167
- EP-A- 0 592 952
- DE-A- 4 215 014

## Beschreibung

Die Erfindung betrifft ein Verfahren zur Herstellung von harten bis zähharten Polyurethanschaumstoffen mit erhöhtem Anteil an offenen Zellen unter Verwendung von Recyclatpolyolen. Die Erfindung betrifft weiterhin die nach diesem Verfahren hergestellten harten bis zähharten Polyurethanschaumstoffe.

Die Herstellung von harten bis zähharten Polyurethanschaumstoffen durch Umsetzung von organischen Polyisocyanaten und/oder modifizierten organischen Polyisocyanaten mit höherfunktionellen Verbindungen mit mindestens zwei reaktiven Wasserstoffatomen und gegebenenfalls niedermolekularen Kettenverlängerungs- und/oder Vernetzungsmitteln in Gegenwart von Katalysatoren, Treibmitteln, Hilfsmitteln und/oder Zusatzstoffen ist bekannt und wurde vielfach beschrieben. Eine zusammenfassende Übersicht über die Herstellung von Polyurethan-Hartschaumstoffen wird z.B. im Kunststoff-Handbuch, Band VII, "Polyurethane", 1. Auflage 1966, herausgegeben von Dr. R. Vieweg und Dr. A. Höchtlen, und 3. Auflage 1993, herausgegeben von Becker/Braun (Carl. Hanser Verlag, München) gegeben.

Es ist ebenfalls bekannt, daß für die Herstellung von harten bzw. zähharten Polyurethanschaumstoffen Polyole eingesetzt werden können, die ihrerseits aus Polyurethanabfällen durch Umsetzung mit mindestens 2 OH-Gruppen enthaltenden Verbindungen, die sogenannte Glykolyse, erhalten wurden. So beschreibt beispielsweise DE-A-25 16 863 die Herstellung eines Polyolgemisches aus Polyurethanabfällen und aliphatischen Diolen, das für die Herstellung von Polyurethanhartschaumstoffen geeignet ist. Nach DE-A-40 24 601 wird aus Polyurethanharnstoffabfällen durch Glykolyse eine polyolhaltige Dispersion erhalten, die zur Herstellung von harten oder halbharten Polyurethanen oder Polyurethanharnstoffen eingesetzt werden kann. Gemäß US 4.014.809 (DE-A-25 57 172) werden aus Polyurethanhartschaumstoffen synthetisierte polyolhaltige flüssige Gemische als Hartschaumkomponente wiederverwendet. Polyolhaltige Flüssigkeiten, hergestellt nach DE-A-37 02 495 aus Polyurethanabfällen, werden als für halbharte und harte Polyurethane, insbesondere Polyurethanschaumstoffe, geeignet beschrieben.

Die nach den genannten Verfahren hergestellten Recyclatpolyole enthalten in jedem Fall die bei der Glykolyse ebenfalls entstehenden Amine, die gesundheitsgefährdend sind und sich außerdem störend in den aus den Recyclatpolyolen formulierten PolyurethanSystemen auswirken. Sie beschleunigen die Reaktion der Polyurethanbildung stark, bilden starre Harnstoffgruppen und vermindern die Steuerbarkeit der Polyurethanbildungsreaktion durch andere Katalysatoren. Weiterhin führt der Gehalt an freien Aminen in Polyolkomponenten von Polyurethansystemen im Kontakt mit Isocyanaten sofort zu hochthixotropen Massen, wie die Patentschrift DD-A-156 480 lehrt. Das gemäß DE-A-40 24 601 durch Zusatz von monomerer Acrylsäure entaminierte Recyclatpolyol weist eine Säurezahl von deutlich über 1 mg KOH/g auf, was zu Schwierigkeiten in den das Recyclatpolyol enthaltenden Polyurethansystemen führen kann. Weiterhin stört der deutliche Geruch nach Acrylsäure. Weiterhin ist bekannt, daß Hartschaumstoffe vorwiegend als geschlossenzellige Schaumstoffe hergestellt werden, um ein gutes thermisches Isoliervermögen zu erzielen. Die Forderung nach offenzelligen Schaumstoffen ist auf dem Gebiet der Hartschaumstoffe selten. Im oben erwähnten Kunststoff-Handbuch, Band VII, "Polyurethane", sind offenzellige Hartschaumstoffe nur am Rande als Blumensteckschaum erwähnt. Bekannt sind auch Anwendungen offenzelliger harter bzw. zähharter Polyurethanschaumstoffe als mechanisch stabile Filter für Flüssigkeiten und Gase, Absorbersäulen zur Reinigung von Gasen sowie Substrate zur Kultur von Mikroorganismen.

Die Erzielung der Offenzelligkeit kann durch speziell strukturierte Polyole, die hohe Anteile an Ethylenoxid enthalten, oder aber durch Einsatz von speziellen Polymethylsiliconen in den Polyurethansystemen erreicht werden. In jedem Falle ist es schwierig und dem Geschick des Formulierers überlassen, gezielte Offenzelligkeit zu erreichen. Die Schwierigkeiten bestehen darin, daß ein zu frühes Öffnen der Zellen zum Schaumkollaps oder zu "Naturporen" führt, ein zu spätes Öffnen der Zellen läßt die Schaumstoffe reißen oder schrumpfen.

Der Erfindung lag daher die Aufgabe zugrunde, ein einfaches, kostengünstiges und robustes Verfahren zur Herstellung weitgehend offenzelliger harter bis zähharter Polyurethanschaumstoffe zu entwickeln.

Überraschenderweise wurde gefunden, daß diese Aufgabe dadurch gelöst werden kann, daß bei der Herstellung der harten bis zähharten Polyurethanhartschaumstoffe ein Recyclatpolyol, welches durch Glykolyse von Polyurethanen und/oder Polyharnstoffpolyurethanen unter Verwendung von Glycidethern entsteht, eingesetzt wird.

Gegenstand der Erfindung ist damit ein Verfahren zur Herstellung von harten bis zähharten Polyurethanschaumstoffen mit erhöhtem Anteil an offenen Zellen durch Umsetzung von
a) organischen und/oder modifizierten organischen Polyisocyanaten mit
b) mindestens einer Verbindung mit mindestens zwei reaktiven Wasserstoffatomen und eines Molekulargewicht von 400 bis 8.000 und gegebenenfalls
c) Kettenverlängerungs- und/oder Vernetzungsmitteln mit Molekulargewichten kleiner als 400 in Gegenwart von
d) Katalysatoren,
e) gegebenenfalls Treibmitteln sowie
f) gegebenenfalls Hilfsmitteln und/oder Zusatzstoffen,
dadurch gekennzeichnet, daß als Komponente b) mindestens ein Recyclatpolyol,welches durch Glykolyse von Polyurethanen und/oder Polyharnstoffpolyurethanen unter Verwendung von Glycidethern entsteht, eingesetzt wird, das Verfahren ohne Einsatz von speziellen Zellöffnern auskommt und die so hergestellten Schaumstoffe eine Offenzelligkeit von mindestens 20 % aufweisen.

Gegenstand der Erfindung sind ferner die nach diesem Verfahren hergestellten harten bis zähharten Polyurethanschaumstoffe.

Das erfindungsgemäße Verfahren zur Herstellung von harten bis zähharten Polyurethanschaumstoffen unter Verwendung von Recyclatpolyolen aus Polyurethanen oder Polyharnstoffpolyurethanen ist einfach und ohne größere Investitionen und Sicherheitsvorkehrungen von jedem Polyurethananwender ausführbar. Die dabei hergestellten Polyurethane sind kostengünstig und für alle für harte bis zähharte Polyurethanschäume üblichen Anwendungen, bei denen es auf erhöhte Offenzelligkeit ankommt, geeignet.

Zu den Ausgangskomponenten für die Herstellung der erfindungsgemäßen harten bis zähharten Polyurethanschaumstoffe ist folgendes zu bemerken:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.
   Besonders bewährt haben sich als organische Polyisocyanate aromatische Polyisocyanate und kommen daher vorzugsweise zur Anwendung: Roh-MDI, Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 30 bis 80 Gew.-%, vorzugsweise von 30 bis 55 Gew.-%.
b) Als Verbindungen mit mindestens zwei reaktiven Wasserstoffatomen und einem Molekulargewicht von 400 bis 8.000 werden erfindungsgemäß ganz oder teilweise Recyclatpolyole allein oder im Gemisch miteinander eingesetzt. Vorteilhafterweise werden zur Erzielung der gewünschten Offenzelligkeit Recyclatpolyole in einem Anteil von mindestens 30 Gew.-%, bezogen auf die Gesamtmenge der Komponente b), verwendet. Aus wirtschaftlichen Gründen kann der Einsatz der Recyclatpolyole wesentlich über 30 Gew.-% liegen bzw. die Komponente b) vollständig aus Recyclatpolyol bestehen. Natürlich können auch weniger als 30 Gew.-% Recyclatpolyole verwendet werden.
   Es war überraschend, daß bei Einsatz von erfindungsgemäßen Recyclatpolyolen bei der Herstellung der harten bis zähharten Polyurethanschaumstoffen ohne zusätzliche Verwendung von zellöffnenden Reagenzien ein hoher Anteil an offenen Zellen entsteht und gleichzeitig die Schrumpfneigung der fertigen Schaumstoffe gering ist.
   Die Recyclatpolyole werden durch Glykolyse von Polyurethanen und/oder Polyharnstoffpolyurethanen, insbesondere deren Abfällen, mit kurzkettigen, hydroxylgruppenhaltigen Verbindungen, wie z.B. Ethylenglykol, Diethylenglykol, Triethylenglykol, Oligoethylenglykole, Propylenglykol, Dipropylenglykol, Tripropylenglykol, Oligopropylenglykole, Butandiole, Neopentylglykol, Glycerol, Ethanolamin, Diethanolamin und Triethanolamin, gegebenenfalls in Anwesenheit von Katalysatoren, wie beispielsweise Alkalimetallsalzen kurzkettiger Fettsäuren, Titanaten, Stannaten und Antimonaten, bei höheren Temperaturen erhalten.
   Als Polyurethane und/oder Polyharnstoffpolyurethane werden insbesondere Polyurethanabfälle eingesetzt, wie sie beispielsweise besonders bei der Demontage von Altautomobilen anfallen (z.B. Autositze, Karosserieteile, Armaturenbretter), wobei diese unter anderem Füllstoffe oder Verstärkungsmittel enthalten können, die das Verfahren nicht stören.
   Die erfindungsgemäß einzusetzenden Recyclatpolyole sind vorzugsweise aminarm. Sie sind insbesondere dadurch erhältlich, daß die Glykolyse der Polyurethane und/oder Polyharnstoffpolyurethane in der Weise durchgeführt wird, daß über den gesamten Verlauf der Reaktion mono- und/oder difunktionelle Glycidether zudosiert werden, wie es in der jüngeren deutschen Patentanmeldung P 42 34 335.6 vom 12.10.92 beschrieben ist.
   Bei der Herstellung der Recyclatpolyole sind handelsübliche Glycidether einsetzbar, die eine oder zwei Epoxidgruppen im Molekül enthalten.
   Als besonders geeignet erwiesen sich die monofunktionellen Glycidether der allgemeinen Formel (I) 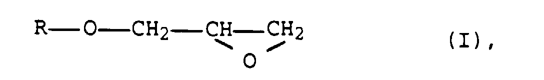 in der R = Phenyl, Cyclohexyl, Methylcyclohexyl, Benzyl, i-Propyl, i-Butyl oder methyl- und/oder ethylverzweigte Kohlenwasserstoffketten mit 5 bis 10 C-Atomen in der geraden Kette und/oder eine Gruppe der allgemeinen Formel 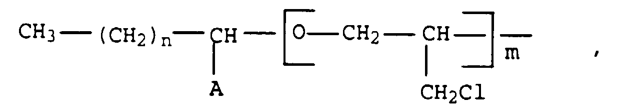 worin A ein Alkylrest mit 1 bis 8 Kohlenstoffatomen ist, n die Werte 3 bis 12 und m die Werte 1 bis 6 annehmen kann, bedeutet.
   Bevorzugt eingesetzt wird, insbesondere bei der Verwendung von PUR-Weichschaumabfällen für die Herstellung von Recyclatpolyolen, 2-Ethylhexylglycidether oder ein Gemisch aus
   50 bis 85 Gew.-% 2-Ethylhexylglycidether,
   10 bis 35 Gew.-% einer oder mehrerer Verbindungen der Struktur 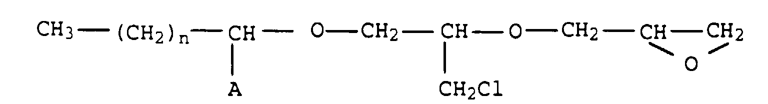 und
   5 bis 20 Gew.-% einer oder mehrerer Verbindungen der Struktur 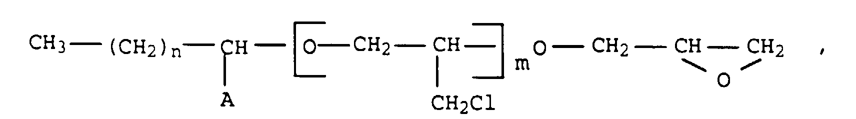
   wobei A ein Alkylrest mit 1 bis 8 Kohlenstoffatomen ist, n die Werte 3 bis 12 und m die Werte 2 bis 6 annahmen kann. Dieses Glycidylethergemisch kann in bekannter Weise aus 2-Ethylhexanol und Epichlorhydrin, wie es bei der Synthese von 2-Ethylhexylglycidether anfällt, hergestellt und als technisches Rohprodukt, lediglich von anorganischen Bestandteilen befreit, das heißt ohne Einschaltung eines Destillationsschrittes, eingesetzt werden.
   Als geeignet erwiesen sich weiterhin die difunktionellen Glycidether der allgemeinen Formel 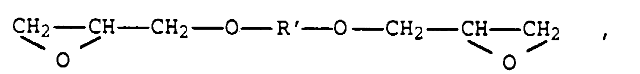 in der R' = Diphenylmethylen, 2,2-Diphenylpropylen (Bisphenol A), unverzweigte Kohlenwasserstoffketten mit 4 bis 10 C-Atomen oder methyl- und/oder ethylverzweigte Kohlenwasserstoffketten mit 4 bis 8 C-Atomen in der geraden Kette bedeutet.
   Als Glycidether können monofunktionelle Glycidether der allgemeinen Formel (I) allein oder in Mischung miteinander, difunktionelle Glycidether der allgemeinen Formel (II) allein oder in Mischung miteinander oder Mischungen von einzelnen oder mehreren mono- und difunktionellen Glycidethern eingesetzt werden.
   Das Mischungsverhältnis von Polyurethanen und/oder Polyharnstoffpolyurethanen zu den OH-Gruppen enthaltenden Verbindungen ist stark abhängig von der chemischen Struktur des eingesetzten Polyurethan/Polyharnstoffpolyurethan sowie von der OH-Zahl der eingesetzten OH-Gruppen enthaltenden Verbindungen. Es liegt üblicherweise zwischen 1 : 1 und 3 : 1, vorzugsweise 1,5 bis 2,5 : 1, Gewichtsanteile Polyurethan/Polyharnstoffpolyurethan zu OH-Gruppen enthaltenden Verbindungen.
   Die Reaktionstemperatur wird üblicherweise zwischen 180°C und 250°C, vorzugsweise zwischen 200°C und 235°C eingestellt.
   Die Reaktionszeit liegt in Abhängigkeit von der Vernetzungsdichte der eingesetzten Polyurethane und/oder Polyharnstoffpolyurethane im allgemeinen bei 2 bis 6 Stunden, vorzugsweise 3 bis 5 Stunden.
   Vorteilhafterweise werden die Glycidether über die gesamte Reaktionszeit, vorzugsweise gleichmäßig, dem aus Polyurethan- und/oder Polyharnstoffpolyurethan und OH-Gruppen enthaltenden Verbindungen bestehenden Ansatz in einer Menge von üblicherweise 5 Gew.% bis 20 Gew.%, bezogen auf den Gesamtansatz, zugegeben.
   Neben den Recyclatpolyolen können in der Komponente (b) weitere organische Verbindungen, die gegenüber Isocyanatgruppen reaktionsfähige Gruppen im Molekül tragen, mitverwendet werden.
   Als weitere Verbindungen b) mit mindestens zwei reaktiven Wasserstoffatomen und einem Molekulargewicht von 400 bis 8.000, vorzugsweise von 1.200 bis 6.000 werden zweckmäßigerweise solche mit einer Funktionalität von 2 bis 8, vorzugsweise 2 bis 6, eingesetzt. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Die Hydroxylzahl der Polyhydroxylverbindungen beträgt dabei in aller Regel 150 bis 850 und vorzugsweise 200 bis 600.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycarbonsäure.
   Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlendioxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3, und ein Molekulargewicht von 480 bis 3000, vorzugsweise 1200 bis 3000 und insbesondere 1800 bis 2500.
   Insbesondere als Polyole verwendet werden jedoch Polyether-polyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Sauren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsaure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 400 bis 8000, vorzugsweise 1200 bis 6000 und insbesondere 1800 bis 4000 und geeignete Polyoxytetramethylen-glykole ein Molekulargewicht bis ungefähr 3500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US 4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
c) Die harten bis zähharten Polyurethanschaumstoffe können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlangerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethan-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung (b) zum Einsatz.
d) Als Katalysatoren (d) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bicyclo-(2,2,2)-octan, und Alkanolaminverbindungen, wie Triethanolamin,Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
e) Zu Treibmitteln (e), welche zur Herstellung der Polyurethanschaumstoffe gegebenenfalls eingesetzt werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Polyoxyalkylen-polyole.
   Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten (c) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsaure, Ricinolsäure und carboxylgruppenhaltige Verbindungen.
   Vorzugsweise Verwendung finden Wasser, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.
   Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 15 Gew.-Teile pro 100 Gew.-Teile der Polyoxyalkylen-polyole. Gegebenenfalls kann es zweckmäßig sein, die gegebenenfalls modifizierten Polyisocyanate (c) mit dem inerten physikalisch wirkenden Treibmittel zu mischen und dadurch die Viskosität zu verringern.
f) Der Reaktionsmischung zur Herstellung der harten bis zähharten Polyurethanschaumstoffe können gegebenenfalls auch noch in der Polyurethanchemie übliche Hilfsmittel und/oder Zusatzstoffe (f) einverleibt werden. Genannt seien beispielsweise Schaumstabilisatoren, Füllstoffe, Farbstoffe, Pigmente, Flammschutzmittel, Hydrolyseschutzmittel, fungistatische und bakteriostatisch wirkende Substanzen.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.
   Geeignete Flammschutzmittel sind beispielsweise Trikresylphosphat,Tris- (2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.
   Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blahgraphit oder Cyanursaurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blahgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.
   Die erfindungsgemäßen harten bis zähharten Polyurethanschaumstoffe können vorteilhaft ohne Zusatz von speziellen Zellöffnern hergestellt werden. Natürlich ist auch die Mitverwendung von zellregulierenden Substanzen möglich.
   Die Offenzelligkeit läßt sich durch die Menge der Recyclatpolyole in Abhängigkeit von der Art der gegebenenfalls mitverwendeten weiteren höhermolekularen Verbindungen mit mindestens zwei reaktiven Wasserstoffatomen b) beeinflussen. Um die je nach Anwendungsgebiet gewünschte hohe Offenzelligkeit zu erreichen, werden die erfindungsgemäß eingesetzten Recyclatpolyole vorteilhaft in einer Menge von mindestens 30 Gew.-%, bezogen auf die Gesamtmenge der Komponente b), eingesetzt.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der harten bis zähharten Polyurethanschaumstoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,7 bis 1,5:1 beträgt. Falls die Polyurethan-Hartschaumstoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1 angewandt.

Die harten bis zähharten Polyurethanschaumstoffe werden vorteilhafterweise nach dem one shot-Verfahren oder Prepolymerverfahren mit Hilfe der Hochdruck- oder Niederdruck-Technik in offenen oder geschlossenen Formwerkzeugen, beispielsweise metallischen Formwerkzeugen, oder freiverschäumt (Ortschaum) hergestellt. Als besonders vorteilhaft hat es sich erwiesen, nach dem Zweikomponenten-Verfahren zu arbeiten und die Aufbaukomponenten (b), (d) und gegebenenfalls (c), (e) und (f) in der Komponente (A) zu vereinigen und als Komponente (B) die organischen und/oder modifizierten organischen Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und im Falle der Herstellung von Formschaumstoffen in das offene oder in das geschlossene Formwerkzeug eingebracht. Die Formwerkzeugtemperatur beträgt zweckmäßigerweise 20 bis 110°C, vorzugsweise 30 bis 60°C und insbesondere 45 bis 50°C.

Im Falle einer Freiverschäumung werden Blöcke zur nachträglichen mechanischen Bearbeitung, beispielsweise durch Sägen, z.B. zu Platten, erzeugt. Ebenso ist es möglich, die erfindungsgemäßen Polyurethansysteme hinsichtlich ihrer Reaktivität so einzustellen, daß sie nach den bekannten Verfahren des Schaumsprühens (Spritzschaumverfahren) verarbeitet werden können, wobei die Beschichtung von senkrechten, waagerechten und hängenden Flächen (über Kopf) möglich ist.

Die nach dem erfindungsgemäßen Verfahren hergestellten harten bis zähharten Polyurethanschaumstoffe weisen eine Dichte von 0,02 bis 0,75 g/cm³, vorzugsweise von 0,025 bis 0,24 g/cm³ und insbesondere von 0,03 bis 0,1 g/cm³ auf. Sie haben eine gleichmäßig feinzellige Schaumstoffstruktur. Die Offenzelligkeit beträgt > 20 %, gemessen nach der Methode der Luftdurchlässigkeit, wobei die fertigen Schaumstofformkörper einen minimalen Schrumpf aufweisen.

Die nach dem erfindungsgemäßen Verfahren hergestellten harten bis zähharten Polyurethane sind für alle für harte bis zähharte Polyurethanschäume üblichen Anwendungen, bei denen es auf erhöhte Offenzelligkeit ankommt, geeignet.

Die Erfindung wird an nachfolgenden Beispielen erläutert:

### Beispiel 1

77,4 Gew.-% Recyclatpolyol, hergestellt aus Polyurethanweichschaumstoffabfällen (Autositzen), (OH-Zahl: 318 mg KOH/g) wurden mit 10,0 Gew.-% eines Saccharose/Glycerin-gestarteten Polyetheralkohols der Funktionalität 8 (OH-Zahl: 440 mg KOH/g), 3,0 Gew.-% Glycerin, 0,6 Gew.-% Dimethylcyclohexylamin, 3,0 Gew.-% Silikon-Stabilisator und 6,0 Gew.-% Wasser vermischt. Die so hergestellte A-Komponente wurde mit polymerem Diphenylmethandiisocyanat (Roh-MDI) im Mischungsverhältnis 100:190 umgesetzt.

Es entstand ein feinzelliger Hartschaum der Rohdichte 34 kg/m³ mit einer Offenzelligkeit von 39 % und einem minimalen Schrumpf. Die bei -30°C und +80°C gemessene Dimensionsstabilität lag unter 1 %.

### Beispiel 2

59,5 Gew.-% Recyclatpolyol, hergestellt aus Polyurethanweichschaumstoffabfallen (Autositzen), (OH-Zahl: 324 mg KOH/g) wurden mit 30,0 Gew.-% eines Saccharose/Glycerin-gestarteten Polyetheralkohols der Funktionalität 8 (OH-Zahl: 440 mg KOH/g), 3,0 Gew.-% Glycerin, 0,5 Gew.-% Tetramethylhexamethylendiamin, 3,0 Gew.-% Silikon-Stabilisator und 4,0 Gew.-% Wasser vermischt. Die so hergestellte A-Komponente wurde mit polymerem Diphenylmethandiisocyanat (Roh-MDI) umgesetzt.

Es entstand ein feinzelliger Hartschaum der Rohdichte 37 kg/m³ mit einer Offenzelligkeit von 44 % und einem minimalen Schrumpf. Die bei -30°C und +80°C gemessene Dimensionsstabilitat lag unter 1 %.

### Beispiel 3

31,0 Gew.-% Recyclatpolyol, hergestellt aus Polyurethanweichschaumstoffabfällen (Autositzen), (OH-Zahl: 324 mg KOH/g) wurden mit 30,0 Gew.-% eines Polyetheralkohols auf Basis Glycerin, Propylenoxid und Ethylenoxid (OH-Zahl: 56 mg KOH/g), 10,0 Gew.-% eines Saccharose/Glycerin-gestarteten Polyetheralkohols der Funktionalität 8 (OH-Zahl: 440 mg KOH/g), 2,5 Gew.-% Methyl-Dicyclohexylamin, 1,5 Gew.-% Silikon-Stabilisator und 25,0 Gew.-% Wasser vermischt. Die so hergestellte A-Komponente wurde mit polymerem Diphenylmethandiisocyanat (Roh-MDI) im Mischungsverhältnis 100:120 umgesetzt.

Es entstand ein feinzelliger Hartschaum der Rohdichte 20 kg/m³ mit einer Offenzelligkeit von 87 % und minimalem Schrumpf.

### Beispiel 4

38,0 Gew.-% Recyclatpolyol, hergestellt aus Polyurethanweichschaumstoffabfällen (Autositzen), (OH-Zahl: 324 mg KOH/g) wurden mit 32,5 Gew.-% eines Polyetheralkohols auf Basis Glycerin, Propylenoxid und Ethylenoxid (OH-Zahl: 56 mg KOH/g), 3,0 Gew.-% Methyl-Dicyclohexylamin, 1,5 Gew.-% Silikon-Stabilisator und 25,0 Gew.-% Wasser vermischt. Die so hergestellte A-Komponente wurde mit polymerem Diphenylmethandiisocyanat (Roh-MDI) im Mischungsverhältnis 100:130 umgesetzt.

Es entstand ein Schaum der Rohdichte 19 kg/m³ mit einer Offenzelligkeit von 92 % und minimalen Schrumpf.

### Beispiel 5 - Vergleichsbeispiel

87,0 Gew.-% eines Saccharose/Glycerin-gestarteten Polyetheralkohols der Funktionalität 8 (OH-Zahl: 440 mg KOH/g) wurden mit 3,0 Gew.-% Glycerin, 1,0 Gew.-% Dimethylcyclohexylamin, 3,0 Gew.-% Silikon-Stabilisator und 6,0 Gew.-% Wasser vermischt. Die so hergestellte A-Komponente wurde mit polymerem Diphenylmethandiisocyanat (Roh-MDI) im Mischungsverhältnis 100:215 zu einem Hartschaum der Rohdichte 34 kg/m³ umgesetzt. Dieser Schaum wies eine Offenzelligkeit von 8 % auf und schrumpfte sehr stark.

### Beispiel 6 - Vergleichsbeispiel

88,5 Gew.-% eines Saccharose/Glycerin-gestarteten Polyetheralkohols der Funktionalität 8 (OH-Zahl: 440 mg KOH/g) wurden mit 3,0 Gew.-% Glycerin, 1,0 Gew.-% Dimethylcyclohexylamin, 3,0 Gew.-% Silikon-Stabilisator und 4,5 Gew.-% Wasser vermischt.

Die so hergestellte A-Komponente wurde mit polymerem Diphenylmethandiisocyanat (Roh-MDI) im Mischungsverhältnis 100:190 zu einem feinzelligen Hartschaum der Rohdichte 40 kg/m³ umgesetzt. Dieser Schaum wies eine Offenzelligkeit von 5 % auf und schrumpfte sehr stark.

## Patentansprüche

1. Verfahren zur Herstellung von harten bis zähharten Polyurethanschaumstoffen mit erhöhtem Anteil an offenen Zellen durch Umsetzung von
a) organischen und/oder modifizierten organischen Polyisocyanaten mit
b) mindestens einer Verbindung mit mindestens zwei reaktiven Wasserstoffatomen und einem Molekulargewicht von 400 bis 8.000 und gegebenenfalls
c) Kettenverlängerungs- und/oder Vernetzungsmitteln mit Molekulargewicht kleiner als 400 in Gegenwart von
d) Katalysatoren,
e) gegebenenfalls Treibmitteln sowie
f) gegebenenfalls Hilfsmitteln und/oder Zusatzstoffen,
dadurch gekennzeichnet, daß als Komponente b) mindestens ein Recyclatpolyol, welches durch Glykolyse von Polyurethanen und/oder Polyharnstoffpolyurethanen unter Verwendung von Glycidethern entsteht, eingesetzt wird, das Verfahren ohne Einsatz von speziellen Zellöffnern auskommt und die so hergestellten Schaumstoffe eine Offenzelligkeit von mindestens 20 %, gemessen nach der Methode der Luftdurchlässigkeit, aufweisen.

2. Verfahren nach Anspruch 1, dadurch gekennzeichnet, daß das Recyclatpolyol in einem Anteil von mindestens 30 Gew.-%, bezogen auf die Gesamtmenge der Komponente b), verwendet wird.

3. Verfahren nach den Ansprüchen 1 oder 2, dadurch gekennzeichnet, daß das Recyclatpolyol durch Glykolyse von Polyurethan-Weichschaumstoffen hergestellt wird.

4. Verfahren nach einem der Ansprüche 1 bis 3, dadurch gekennzeichnet, daß bei der Herstellung der Recyclatpolyole mono- und/oder difunktionelle Glycidether verwendet werden.

5. Verfahren nach einem der Ansprüche 1 bis 4, dadurch gekennzeichnet, daß das eingesetzte Recyclatpolyol aminarm ist.

6. Harte bis zähharte Polyurethanschaumstoffe mit erhöhtem Anteil an offenen Zellen, erhältlich durch Umsetzung von
a) organischen und/oder modifizierten organischen Polyisocyanaten mit
b) mindestens einer Verbindung mit mindestens zwei reaktiven Wasserstoffatomen und einem Molekulargewicht von 400 bis 8.000 und gegebenenfalls
c) Kettenverlangerungs- und/oder Vernetzungsmitteln mit Molekulargewichten kleiner als 400 in Gegenwart von
d) Katalysatoren,
e) gegebenenfalls Treibmitteln sowie
f) gegebenenfalls Hilfsmitteln und/oder Zusatzstoffen,
dadurch gekennzeichnet, daß als Komponente b) mindestens ein Recyclatpolyol, welches durch Glykolyse von Polyurethanen und/oder Polyharnstoffpolyurethanen unter Verwendung von Glycidethern entsteht, eingesetzt wird, das Verfahren ohne Einsatz von speziellen Zellöffnern auskommt und die Schaumstoffe eine Offenzelligkeit von mindestens 20 %, gemessen nach der Methode der Luftdurchlässigkeit, aufweisen.

7. Harte bis zähharte Polyurethanschaumstoffe nach Anspruch 6, dadurch gekennzeichnet, daß das Recyclatpolyol in einem Anteil von mindestens 30 Gew.-%, bezogen auf die Gesamtmenge der Komponente b), verwendet wird.

## Claims

1. A process for the production of rigid to semirigid polyurethane foams having an increased content of open cells, by reacting
a) organic and/or modified organic polyisocyanates with
b) at least one compound containing at least two reactive hydrogen atoms and having a molecular weight of from 400 to 8000, and, if desired,
c) chain extenders and/or crosslinking agents having molecular weights of less than 400, in the presence of
d) catalysts,
e) if desired, blowing agents and
f) if desired, auxiliaries and/or additives,
wherein component b) is at least one recyclate polyol obtained by glycolysis of polyurethanes and/or polyurea-polyurethanes using glycidyl ethers, the process can be carried out without the use of special cell openers, and the foams produced in this manner have a proportion of open cells of at least 20 %, measured by the air permeability method.

2. A process as claimed in claim 1, wherein the recyclate polyol is used in a proportion of at least 30 % by weight, based on the total amount of component b).

3. A process as claimed in claim 1 or 2, wherein the recyclate polyol is prepared by glycolysis of flexible polyurethane foams.

4. A process as claimed in any of claims 1 to 3, wherein monofunctional and/or difunctional glycidyl ethers are used in the preparation of the recyclate polyols.

5. A process as claimed in any of claims 1 to 4, wherein the recyclate polyol employed has a low amine content.

6. A rigid to semirigid polyurethane foam having an increased content of open cells, obtainable by reacting
a) organic and/or modified organic polyisocyanates with
b) at least one compound containing at least two reactive hydrogen atoms and having a molecular weight of from 400 to 8000, and, if desired,
c) chain extenders and/or crosslinking agents having molecular weights of less than 400, in the presence of
d) catalysts,
e) if desired, blowing agents and
f) if desired, auxiliaries and/or additives,
wherein component b) is at least one recyclate polyol obtained by glycolysis of polyurethanes and/or polyurea-polyurethanes using glycidyl ethers, the process can be carried out without the use of special cell openers, and the foams have a proportion of open cells of at least 20 %, measured by the air permeability method.

7. A rigid to semirigid polyurethane foam as claimed in claim 6, wherein the recyclate polyol is used in a proportion of at least 30 % by weight, based on the total amount of component b).

## Revendications

1. Procédé pour la préparation de mousses de polyuréthanne dures à résilientes possédant une fraction plus importante d'alvéoles ouverts, par mise en réaction de
a) polyisocyanates organiques et/ou organiques modifiés avec
b) au moins un composé contenant au moins deux atomes d'hydrogène réactif et possédant un poids moléculaire de 400 à 8.000 et, le cas échéant,
c) des agents d'allongement de chaînes et/ou de réticulation possédant des poids moléculaires inférieurs à 400, en présence de
d) catalyseurs,
e) le cas échéant, des agents moussants, ainsi que
f) le cas échéant, des adjuvants et/ou des additifs,
caractérisé en ce qu'on met en oeuvre, à titre de composant b), au moins un polyol sous forme d'un produit de recyclage que l'on obtient par glycolyse de polyuréthannes et/ou de polyurée-polyuréthannes en utilisant des éthers glycidyliques; le procédé s'en sort sans la mise en oeuvre d'agents spécifiques procurant des alvéoles ouverts; et les mousses ainsi obtenues présentent une fraction d'alvéoles ouverts représentant au moins 20%, mesurée conformément à la méthode de la perméabilité à l'air.

2. Procédé selon la revendication 1, caractérisé en ce qu'on utilise le polyol sous forme d'un produit de recyclage en une fraction d'au moins 30% en poids rapportés à la quantité totale du composant B.

3. Procédé selon la revendication 1 ou 2, caractérisé en ce qu'on prépare le polyol sous forme d'un produit de recyclage, par glycolyse de mousses tendres de polyuréthanne.

4. Procédé selon l'une quelconque des revendications 1 à 3, caractérisé en ce qu'on utilise, lors de la préparation des polyols sous forme de produits de recyclage, des éthers glycidyliques mono- et/ou difonctionnels.

5. Procédé selon l'une quelconque des revendications 1 à 4, caractérisé en ce que le polyol mis en oeuvre sous forme d'un produit de recyclage est pauvre en amine.

6. Mousses de polyuréthanne dures à résilientes possédant une fraction plus importante d'alvéoles ouverts, que l'on obtient par mise en réaction de
a) polyisocyanates organiques et/ou organiques modifiés avec
b) au moins un composé contenant au moins deux atomes d'hydrogène réactif et possédant un poids moléculaire de 400 à 8.000 et, le cas échéant,
c) des agents d'allongement de chaînes et/ou de réticulation possédant des poids moléculaires inférieurs à 400, en présence de
d) catalyseurs,
e) le cas échéant, des agents moussants, ainsi que
f) le cas échéant, des adjuvants et/ou des additifs,
caractérisées en ce qu'on met en oeuvre, à titre de composant b), au moins un polyol sous forme d'un produit de recyclage que l'on obtient par glycolyse de polyuréthannes et/ou de polyurée-polyuréthannes en utilisant des éthers glycidyliques; le procédé s'en sort sans la mise en oeuvre d'agents spécifiques procurant des alvéoles ouverts; et les mousses présentent u§ne fraction d'alvéoles ouverts représentant au moins 20%, mesurée conformément à la méthode de la perméabilité à l'air.

7. Mousses de polyuréthanne dures à résilientes selon la revendication 6, caractérisées en ce qu'on utilise le polyol sous forme d'un produit de recyclage en une fraction d'au moins 30% en poids rapportés à la quantité totale du composant B.
